# EUROPEAN PATENT SPECIFICATION

(11) **EP 2 915 750 B1**
(45) Date of publication and mention of the grant of the patent: **14.11.2018**
(21) Application number: 14195867.8
(22) Date of filing: 02.12.2014
(51) Int. Cl.: B64D 37/32

(54) **Onboard inert gas generation system**
Bordeigenes System zur Inertgaserzeugung
Système de génération de gaz inerte embarqué

(30) Priority: 06.12.2013 GB 201321614
(43) Date of publication of application: 09.09.2015
(73) Proprietor: Eaton Intelligent Power Limited, 4 Dublin (IE)
(72) Inventor: Massey, Alan, Southampton, Hampshire SO316 NN (GB)
(74) Representative: Eaton IP Group EMEA

(56) References cited:
- EP-A2- 1 273 515
- EP-A2- 2 163 476
- EP-A2- 2 202 150
- WO-A1-2013/079454
- US-A1- 2005 229 968

## Description

This invention relates to apparatus and method for the onboard generation of inert gas on an aircraft to facilitate inerting of the fuel tanks and other areas on board the aircraft.

In this specification the widely accepted terminology is employed with the term "inert gas generation" meaning the generation of an oxygen depleted or "nitrogen-enriched atmosphere" (NEA). It is well-known to use one or more filters or "air separation modules" (ASMs) which separate a supply of inlet air into a nitrogen-enriched air portion (NEA) and an oxygen-enriched portion (OEA).

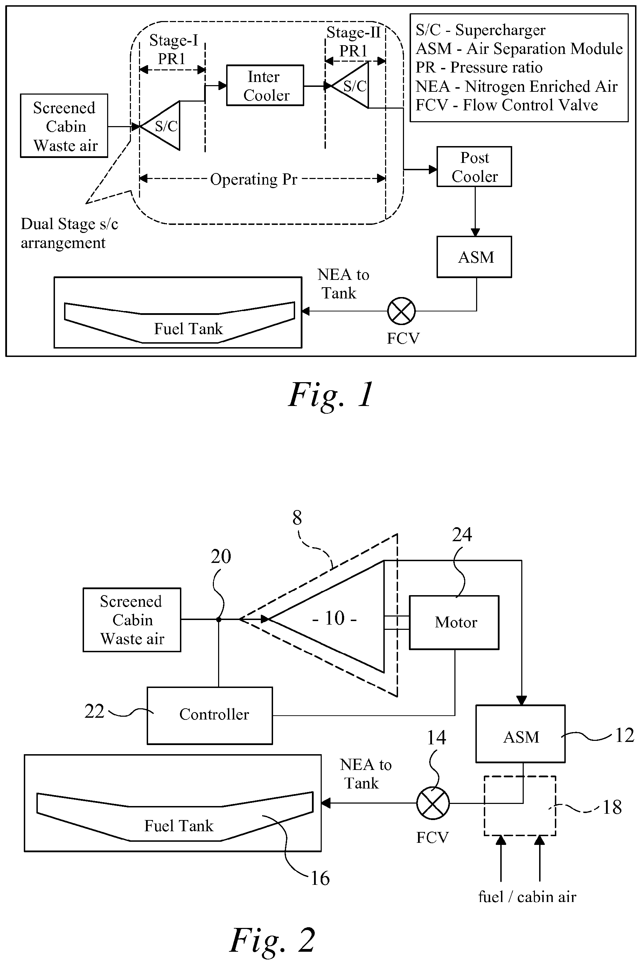

Current fuel tank inerting systems which include centrifugal compressors to boost cabin air typically require post-compression heat exchangers to reduce the compressed air to a temperature of 71°C (160°F) for supply to an air separation module. This scheme requires a ram-air cooling system comprising a NACA intake, ducting, a fan, a temperature control valve, a heat exchanger and an outlet to discharge the cooling air. A typical fuel tank inerting system architecture using cabin air as an air source is shown in Figure 1 of the accompanying drawings. This shows a two-stage compressor comprising two compressors with intercooling, and a post-compression heat exchanger which cools the air supply to the air separation module to below about 71°C. Both the intercooler and the heat exchanger typically require a ram-air cooling circuit comprising a NACA intake, ducting, a temperature sensor and an outlet for discharging the cooling air. The weight of the equipment and the volume required to contain it, along with the multiple hull penetrations, place severe constraints on the aircraft designer. Furthermore, these above factors militate against retro-fitting such equipment to an existing aircraft.

ASM technology has evolved by the use of redesigning the flow paths of the incoming air and the NEA fraction, and also using high temperature fibres and resins for the components making up the air separation module, so that air separation modules capable of filtering air with an inlet temperature of up to about 150°C (300°F) are available.

We have found that it is possible to provide a much simplified system for the generation of inert gas which receives cabin air, compresses it via a single stage compressor and then supplies it to an ASM without requiring the other second stage compressor, the inter-cooler and the post-compression heat exchanger and their respective cooling circuits of the conventional arrangement. The system therefore operates at higher temperature but at lower pressures than previously used. The higher operating temperature enhances the performance of the air separation module which compensates for the lower operating pressure so that previous separation performance is maintained.

WO 2013/079454 by the applicant provides an onboard inert gas generation system for an aircraft, comprising a compressor configured to receive cabin waste air and to supply compressed air to an air separation module configured to separate the air into a nitrogen-enriched air fraction and an oxygen-enriched air fraction, with the compressed air passing from the compressor to the air separation module directly, without active cooling.

The term "without active cooling" is used to mean that the flow downstream of the compressor to the air separation module does not pass through a heat exchanger requiring provision of a secondary, cooling flow, from an external source. However it does not preclude the possibility of cooling the compressor itself, for example by means of cooling fins, the external passage of a coolant fluid such as a further portion of cabin air, or a mixture of these features.

In this arrangement the second stage compressor, the inter-cooler and the post second stage heat exchanger are no longer required. This means that the inert gas generation system does not require the provision of ram-air to be supplied to the inter-cooler or post compression cooler, and so the need for multiple hull penetrations, the associated inlets and outlets and ducting is removed, making the arrangement suitable for retro-fitting.

According to the invention, the arrangement includes a controller responsive to variation in the temperature of the cabin waste air to adjust at least one of the operating speed and the pressure ratio of the compressor to maintain the compressed air supplied to the air separation module at a
predetermined temperature.

The compressor may be driven by any suitable prime mover such as an electric motor supplied from the aircraft electrical system or by means of a turbine, or by shaft power.

Preferably, the compressor operates with a pressure ratio of between 1.5 and 3.5, and ideally around 2.5, such that the delivery temperature does not exceed the maximum operating temperature of the air separation module.

Preferably, in use, the compressor is operated to deliver compressed air to the ASM at a temperature of in excess of 80°C and up to 150°C (300°F).

One embodiment may include a temperature sensor for monitoring the temperature of the cabin waste air, and a controller responsive to said temperature sensor for controlling at least one of the operating speed and the pressure ratio of said compressor to maintain the compressed air supplied to the air separation module at said predetermined temperature.

The onboard inert gas generation system may include means for cooling the NEA fraction; this may comprise a heat exchanger cooled by a suitable coolant, which may for example comprise aircraft fuel or cabin air.

In another aspect, this invention provides a method of onboard inert gas generation with the features of claim 9, which comprises supplying cabin air to a single-stage compressor, passing compressed air from said compressor to an air separation module, and obtaining from said air separation module an NEA fraction of said compressed air, without active cooling of said compressed air between said compressor and said air separation module.

The invention will now be described below, by way of example only, reference being made to the accompanying drawings, in which:
Figure 1 is a block diagram of a prior art arrangement of an aircraft fuel tank inerting system, and
Figure 2 is a block diagram of an aircraft fuel tank inerting system in accordance with this invention.

Referring to Figure 2, screened cabin waste air is supplied from the aircraft cabin to a single-stage compressor 10. The single-stage compressor typically receives cabin air at a temperature of up to 24°C and is capable of operating at a pressure of 2.5 with an isentropic efficiency of 70%. The single-stage compressor delivers compressed air to an air separation module (ASM) 12 at a temperature of up to 150°C. The NEA fraction from the ASM 12 passes via a control valve 14 to the aircraft fuel tank 16. If required, the NEA fraction from the air separation module may be cooled by suitable means shown schematically at 18. For example, it may be cooled by the aircraft fuel using a suitable heat exchanger. The heat transferred from the NEA to the aircraft fuel may be used beneficially to preheat the aircraft fuel as it exits the tank to pass to the aircraft engine. This may improve engine performance and, furthermore, provide anti-icing.

In another arrangement the NEA may be cooled by a suitable heat exchanger external to the fuel tank with suitable coolant, for example a further portion of cabin air.

The compressor 10 may also include integral cooling as indicated schematically at 8.

A temperature sensor 20 is provided at the compressor inlet and supplies a temperature signal to a controller 22 which controls the speed of the motor 24 driving the compressor, to ensure that the temperature of the fluid leaving the compressor is controlled to a constant level, typically 150°C. In operation, if the cabin air temperature provided to the compressor varies, the compressor speed and consequently its pressure ratio is adjusted by the controller to maintain a substantially constant temperature to the ASM 12. It will be appreciated that an alternative control system will be to detect the temperature at the compressor outlet and to adjust the speed of the motor driving the compressor accordingly.

In the above embodiment the compressor may be a centrifugal compressor, a rotary positive displacement compressor or any other suitable compressor.

The embodiments described herein provide significant reduction in system costs, weight and space envelope, and also increase system efficiency, reliability and availability.

## Claims

1. An onboard inert gas generation system for an aircraft, comprising a compressor (10) configured to receive cabin waste air and to supply compressed air to an air separation module (12) configured to separate the air into a nitrogen-enriched air fraction and an oxygen-enriched air fraction, with the compressed air passing from the compressor to the air separation module directly, without active cooling, **characterized in that** the onboard inert gas generation system further comprises a controller (22) responsive to variation in the temperature of the cabin waste air, configured to adjust at least one of the operating speed and the pressure ratio of the compressor to maintain the compressed air supplied to the air separation module (12) at said predetermined temperature, and **in that** the compressor (10) is configured to be controlled by the controller (22) as to deliver compressed air to the air separation module (12) at said predetermined temperature.

2. An onboard inert gas generation system according to Claim 1, wherein the compressor includes a housing and a cooling arrangement for said housing.

3. An onboard inert gas generation system according to Claim 1 or Claim 2, wherein the compressor (10) is operated with a pressure ratio of between 1.5 and 3.5.

4. An onboard inert gas generation system according to Claim 3, wherein the compressor (10) is operated with a pressure ratio of about 2.5

5. An out board inert gas generation system according to claim 1, which includes a temperature sensor (20) for monitoring the temperature of the cabin waste air, and a controller (22) responsive to said temperature sensor for controlling at least one of the operating speed and the pressure ratio of said compressor (12) to maintain the compressed air supplied to the air separation module (12) at said predetermined temperature.

6. An onboard inert gas generation system according to any of the preceding Claims, which includes a cooling arrangement (18) for cooling the NEA fraction.

7. An onboard inert gas generation system according to Claim 6, wherein said cooling arrangement (18) comprises a heat exchanger having a coolant path for receiving aircraft fuel.

8. An onboard inert gas generation system according to Claim 6, wherein said cooling arrangement (18) comprises a heat exchanger having a coolant path for receiving cabin air.

9. A method of onboard inert gas generation by means of an onboard inert gas generation system according to claim 1, comprising supplying cabin air to the compressor (10), passing compressed air from said compressor to the air separation module (12), and obtaining from said air separation module an NEA fraction of said compressed air, without active cooling of said compressed air between said compressor and said air separation module.

## Patentansprüche

1. Bordeigenes Inertgaserzeugungssystem für ein Flugzeug, umfassend einen Kompressor (10), der dazu ausgebildet ist, Kabinenabluft aufzunehmen und komprimierte Luft einem Luftzerlegungsmodul (12) zuzuführen, welches dazu ausgebildet ist, die Luft in eine stickstoffangereicherte Luftfraktion und eine sauerstoffangereicherte Luftfraktion zu zerlegen, wobei die komprimierte Luft direkt, ohne aktive Kühlung, vom Kompressor zum Luftzerlegungsmodul passiert, **dadurch gekennzeichnet, dass** das bordeigene Inertgaserzeugungssystem weiter umfasst
eine auf Veränderung in der Temperatur der Kabinenabluft reagierende Steuerung (22), die dazu ausgebildet ist, mindestens eines aus der Betriebsgeschwindigkeit und dem Druckverhältnis des Kompressors anzupassen, um die dem Luftzerlegungsmodul (12) zugeführte komprimierte Luft auf der vorbestimmten Temperatur zu halten, und dadurch, dass der Kompressor (10) dazu ausgebildet ist, von der Steuerung (22) so gesteuert zu werden, dass er dem Luftzerlegungsmodul (12) komprimierte Luft auf der vorbestimmten Temperatur liefert.

2. Bordeigenes Inertgaserzeugungssystem nach Anspruch 1, wobei der Kompressor ein Gehäuse und eine Kühlanordnung für das Gehäuse einschließt.

3. Bordeigenes Inertgaserzeugungssystem nach Anspruch 1 oder Anspruch 2, wobei der Kompressor (10) mit einem Druckverhältnis von zwischen 1,5 und 3,5 betrieben wird.

4. Bordeigenes Inertgaserzeugungssystem nach Anspruch 3, wobei der Kompressor (10) mit einem Druckverhältnis von etwa 2,5 betrieben wird.

5. Außenboard-Inertgaserzeugungssystem nach Anspruch 1, das einen Temperatursensor (20) zum Überwachen der Temperatur der Kabinenabluft, und eine auf den Temperatursensor reagierende Steuerung (22) zum Steuern von mindestens einem aus der Betriebsgeschwindigkeit und dem Druckverhältnis des Kompressors (12) umfasst, um die dem Luftzerlegungsmodul (12) zugeführte komprimierte Luft auf der vorbestimmten Temperatur zu halten.

6. Bordeigenes Inertgaserzeugungssystem nach einem der vorstehenden Ansprüche, das eine Kühlanordnung (18) zum Kühlen der SAA-Fraktion umfasst.

7. Bordeigenes Inertgaserzeugungssystem nach Anspruch 6, wobei die Kühlanordnung (18) einen Wärmetauscher umfasst, der einen Kühlmittelpfad zum Aufnehmen von Flugzeugtreibstoff umfasst.

8. Bordeigenes Inertgaserzeugungssystem nach Anspruch 6, wobei die Kühlanordnung (18) einen Wärmetauscher umfasst, der einen Kühlmittelpfad zum Aufnehmen von Kabinenluft aufweist.

9. Verfahren zur bordeigenen Inertgaserzeugung mittels eines bordeigenen Inertgaserzeugungssystems nach Anspruch 1, umfassend das Zuführen von Kabinenluft zum Kompressor (10), Passieren von komprimierter Luft aus dem Kompressor zum Luftzerlegungsmodul (12), und Erhalten, aus dem Luftzerlegungsmodul, einer SAA-Fraktion der komprimierten Luft, ohne aktive Kühlung der komprimierten Luft zwischen dem Kompressor und dem Luftzerlegungsmodul.

## Revendications

1. Système de génération de gaz inerte embarqué pour un aéronef, comprenant un compresseur (10) configuré pour recevoir de l'air vicié de cabine et pour fournir de l'air comprimé à un module de séparation d'air (12) configuré pour séparer l'air en une fraction d'air enrichi en azote et en une fraction d'air enrichi en oxygène, l'air comprimé passant directement du compresseur au module de séparation d'air, sans refroidissement actif, **caractérisé en ce que** le système de génération de gaz inerte embarqué comprend en outre
un régulateur (22) sensible à une variation de la température de l'air vicié de cabine, configuré pour régler au moins l'un de la vitesse de fonctionnement et du rapport de pression du compresseur pour maintenir l'air comprimé fourni au module de séparation d'air (12) à ladite température prédéterminée, et **en ce que** le compresseur (10) est configuré pour être régulé par le régulateur (22) de sorte à délivrer de l'air comprimé au module de séparation d'air (12) à ladite température prédéterminée.

2. Système de génération de gaz inerte embarqué selon la revendication 1, dans lequel le compresseur inclut un logement et un agencement de refroidissement pour ledit logement.

3. Système de génération de gaz inerte embarqué selon la revendication 1 ou la revendication 2, dans lequel le compresseur (10) fonctionne avec un rapport de pression compris entre 1,5 et 3,5.

4. Système de génération de gaz inerte embarqué selon la revendication 3, dans lequel le compresseur (10) fonctionne avec un rapport de pression de 2,5 environ.

5. Système de génération de gaz inerte extérieur selon la revendication 1, qui inclut un capteur de température (20) pour surveiller la température de l'air vicié de cabine, et un régulateur (22) sensible audit capteur de température pour réguler au moins l'un de la vitesse de fonctionnement et du rapport de pression dudit compresseur (12) pour maintenir l'air comprimé fourni au module de séparation d'air (12) à ladite température prédéterminée.

6. Système de génération de gaz inerte embarqué selon l'une quelconque des revendications précédentes, qui inclut un agencement de refroidissement (18) pour refroidir la fraction d'air enrichi en azote.

7. Système de génération de gaz inerte embarqué selon la revendication 6, dans lequel ledit agencement de refroidissement (18) comprend un échangeur de chaleur ayant un trajet de réfrigérant pour recevoir le carburant de l'aéronef.

8. Système de génération de gaz inerte embarqué selon la revendication 6, dans lequel ledit agencement de refroidissement (18) comprend un échangeur de chaleur ayant un trajet de réfrigérant pour recevoir l'air de la cabine.

9. Procédé de génération de gaz inerte embarqué au moyen d'un système de génération de gaz inerte embarqué selon la revendication 1, comprenant la fourniture d'air cabine au compresseur (10), faisant passer l'air comprimé dudit compresseur au module de séparation d'air (12), et l'obtention à partir dudit module de séparation d'air d'une fraction d'air enrichi en azote dudit air comprimé, sans refroidissement actif dudit air comprimé entre ledit compresseur et ledit module de séparation d'air.
